# EUROPEAN PATENT SPECIFICATION

(11) **EP 1 125 393 B1**
(45) Date of publication and mention of the grant of the patent: **20.01.2010**
(21) Application number: 99970526.2
(22) Date of filing: 14.10.1999
(51) Int. Cl.: G06F 21/24

(54) **METHOD OF SENDING AND RECEIVING SECURE DATA WITH A SHARED KEY**
VERFAHREN ZUM SENDEN UND EMPFANGEN VON SICHEREN DATEN UNTER VERWENDUNG EINES VERTEILTEN SCHLÜSSELS
PROCEDE D'ENVOI ET DE RECEPTION DE DONNEES PROTEGEES A L'AIDE D'UNE CLE PARTAGEE

(30) Priority: 14.10.1998 US 104270 P
(43) Date of publication of application: 22.08.2001
(73) Proprietor: Aegis Systems Inc., Mountain View, CA 94303 (US)
(72) Inventor: SPRAGGS, Lynn, Vernon, British Columbia V1B 1K3 (CA)
(74) Representative: Käck, Jürgen
(86) International application number: PCT/US1999/024142
(87) International publication number: WO 2000/022773

(56) References cited:
- EP-A- 0 687 087
- US-A- 4 193 131
- US-A- 5 148 479
- US-A- 5 544 246
- US-A- 5 649 118
- US-A- 5 724 424

## Description

### BACKGROUND OF THE INVENTION

### 1. Field of the invention

The present invention relates generally to computer security and more specifically to allow the secure transfer and receipt of data between computers.

### 2. Description of the Prior Art

In order to securely transfer data between computers on the Internet, various different types of encryption/decryption methods are used. One way of securely transferring data over the Internet includes the use of a public key/private key system.

A public key is provided by some designated authority as a key that, combined with a private key derived from the public key, can be used to effectively encrypt and decrypt messages and digital signatures.

In public key cryptography, a public and private key are created simultaneously using the same algorithm (a popular one is known as RSA) by a certificate authority. The private key is given only to the requesting party and the public key is made publicly available (as part of a digital certificate) in a directory that all parties can access. The private key is never shared with anyone or sent across the Internet. The private key is used to decrypt text that has been encrypted with the public key counterpart by someone else who has the public key.

Public key cryptography generally requires a large mathematical decomposition in order to work effectively. Generally, the length of a private key is in the order of 64 bytes. Decomposing these relatively small private keys requires considerable computational power. Public key cryptography is generally used as a one-way encryption and if a private key is changed, then everyone else that has the public key counterpart must receive a new public key.

Thus, it would be desirable to provide a system and method of securing data that is easy to use, does not require a public/private key, allows for a larger private key for more security, uses less computation power than public key cryptography, and can be used in two directions.

US 5,751,813 A discloses the use of an encryption server for decrypting/encrypting messages from a first user with a private server key. An encrypted first message is decrypted using a first key yielding a second encrypted message and accompanying information. Using a second key, the accompanying information and the second encrypted message are encrypted again and sent to a second user.

US 5,787,175 A proposes an access control to a work group document stored on a computer system. Decryption of the work group document and thereby access to the document is only allowed to those users being member of a predefined work group. Each member of the work group has a public key for the decryption process.

According to GB 2 318 486 A a communication system is provided connecting a server to clients. The server stores secured data and encrypted private keys. The server also provides an applet to be executed at the client. At the client's side the applet retrieves the encrypted private key and decrypts it using a key encryption key input by the user at the client.

### SUMMARY OF THE INVENTION

A system and method is provided for sending and receiving secure data. The data is secured by encrypting and decrypting the data with a key that is shared between authorized users and the server computer. As the server computer receives a user's encrypted data, the server computer decrypts the data using the user's shared key stored in a database on the server. The server computer can then process the data according to the user's instructions, this could include securely storing the data for retrieval by another user, processing the data, and/or securely sending the data to a second user by encrypting the data with the second user's shared key.

It is an object of the invention to provide a method and computer-readable medium enabling a secure transfer of data via a server. The invention is defined in claims 1 and 3, respectively. A particular embodiment is set out in the dependent claim 2.

### BRIEF DESCRIPTION OF THE DRAWINGS

The present invention may be better understood, and its numerous objects, features, and advantages made apparent to those skilled in the art by referencing the accompanying illustrations. For simplicity and ease of understanding, common numbering of elements is employed where an element is the same in different illustrations.
FIG. 1 is a schematic diagram illustrating a sending client transmitting secure data through a server to a receiving client over the Internet, in accordance with the present invention;
FIG. 2 is a block diagram of the server computer shown in FIG. 1, in accordance with the present invention;
FIG. 3 is a block diagram of one embodiment of the non-volatile memory module located within the server computer of FIG. 2; and
FIG. 4 is a block diagram of the client computers shown in FIG. 1, in accordance with the present invention;
FIG. 5 is a block diagram of one embodiment of the non-volatile memory module located within the client computers of FIG. 4;
FIG. 6 is a flowchart of a method illustrating how a sending client, having a shared private key, passes encrypted data to a server computer, according to the invention;
FIG. 7 is a flowchart of a method illustrating how a receiving client, having a shared private key, requests secure data from a server computer, in accordance with the invention; and
FIG. 8 is a flowchart of a method illustrating how a client, having a shared private key, passes secure data through a server computer.

### DETAILED DESCRIPTION OF THE INVENTION

The following is a detailed description of illustrative embodiments of the present invention. As these embodiments of the present invention are described with reference to the aforementioned illustrations, various modifications or adaptations of the methods and or specific structures described may become apparent to those skilled in the art. All such modifications, adaptations, or variations that rely upon the teachings of the present invention, and through which these teachings have advanced the art, are considered to be within the spirit and scope of the present invention. Hence, these descriptions and drawings should not be considered in a limiting sense, as it is understood that the present invention is in no way limited to only the embodiments illustrated.

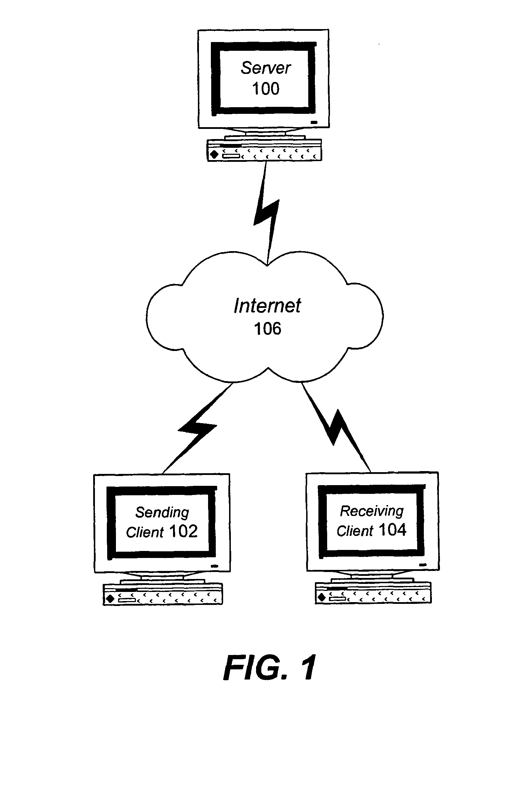

Referring now to FIG. 1, a schematic diagram illustrates a server 100 used to receive encrypted data from a sending client computer 102 and transmit encrypted data to a receiving client computer 104 through the Internet 106 using shared private keys. The sending client 102 and receiving client 104 share their own private key with the server 100, but do not share their private key with anyone else.

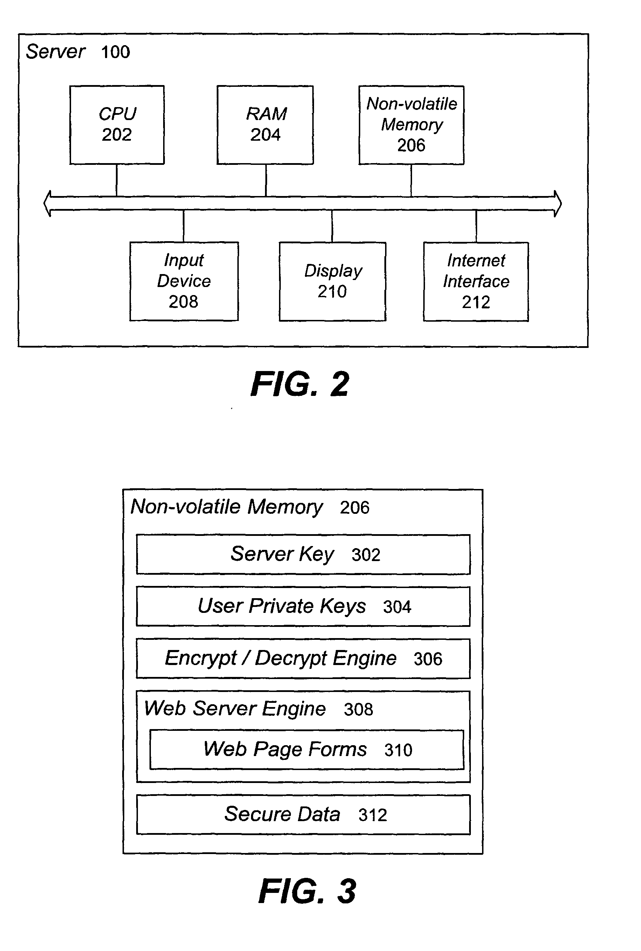

FIG. 2 is a block diagram of the server computer 100 shown in FIG. 1. Server 100 includes a CPU 202, a RAM 204, a non-volatile memory 206, an input device 208, a display 210, and an Internet interface 212 for providing access to the Internet.

FIG. 3 is a block diagram of one embodiment of the non-volatile memory module 206 located within the server computer 100 of FIG. 2. The non-volatile memory 206 includes a private server key 302, a database of user private keys 304, an encrypt/decrypt engine 306, a web server engine 308 containing web page forms 310, and a secure data database 312 for storing encrypted data. The private server key 302 is known only to the server and is not shared with anyone. The database of user private keys 304 includes the private keys of registered users. Each private key of a registered user is shared only with the server and not with other users.

The encrypt/decrypt engine 306 is programmed to encrypt and decrypt data using a password or a key. Excellent results can be obtained when using the blowfish algorithm for encryption and decryption. Other types of symmetric key encryption/decryption algorithms can also be employed within the encrypt/decrypt engine 306. The computation power required to encrypt and decrypt data using a single key is much less than the computational power required in a public/private key system, therefore longer keys can be used to provide an extremely high-level of security.

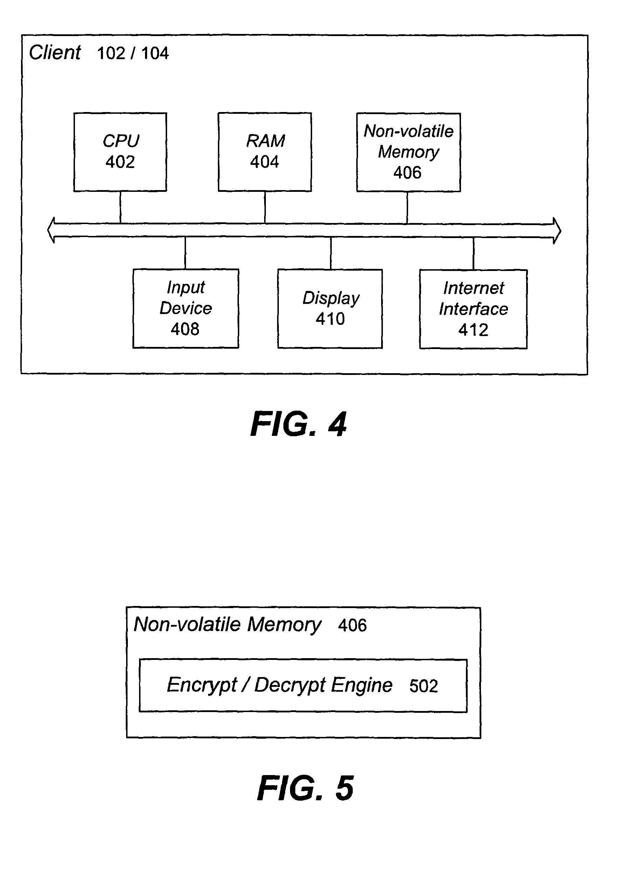

FIG. 4 is a block diagram of a sending client computer 102 or a receiving client computer 104 shown in FIG. 1. Client 102, 104 includes a CPU 402, a RAM 404, a non-volatile memory 406, an input device 408, a display 410, and an Internet interface 412 for providing access to the Internet.

FIG. 5 is a block diagram of one embodiment of the non-volatile memory module 404 located within the clients 102, 104 of FIG. 4. The non-volatile memory 406 includes an encrypt/decrypt engine 502 for encrypting and decrypting data. The encrypt/decrypt engine 502 can also be stored in RAM 404. Excellent results can be obtained when the encrypt/decrypt engine is served up as a Java™ applet to the clients 102, 104. The Java™ applet can be served up with a web page from an email sent to the clients 102, 104, and then stored on their hard drive.

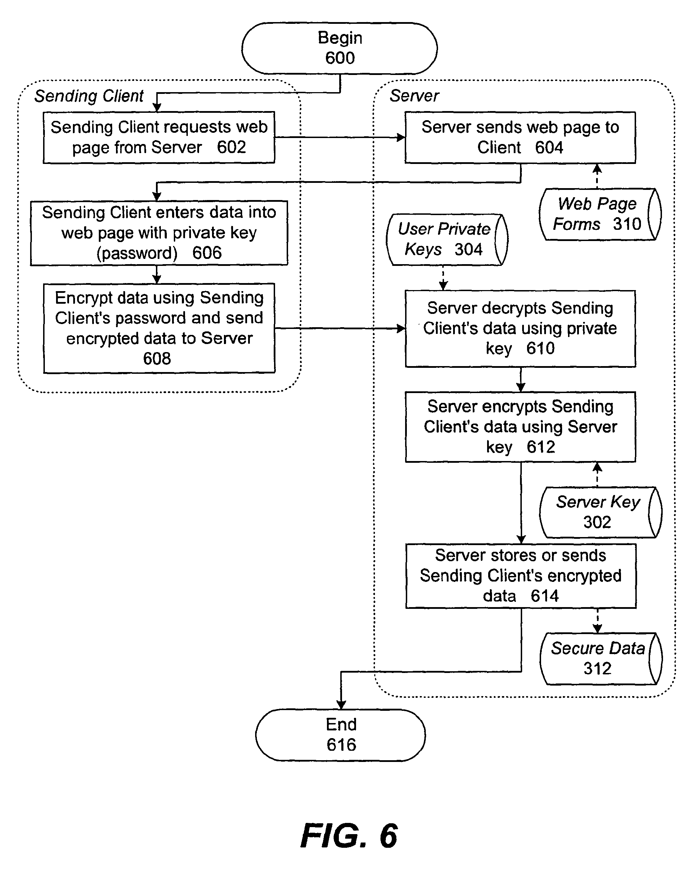

FIG. 6 is a flowchart of a method illustrating how a sending client, with a shared private key, passes encrypted data to a server computer through the Internet in accordance with the invention. The process begins at step 600. The sending client establishes a session over the Internet with a suitable server by requesting a web page from the server computer at step 602. At step 604 the server sends a web page form from the web page forms database 310 to the sending client. Next at step 606 the sending client enters data into the web page along with the user's private key. At step 608 the data is encrypted with the encrypt/decrypt engine at the sending client's computer using the user's private key and then sent to the server.

At step 610 the server receives the sending client's data and decrypts the data with the user's private key that is stored in the user private keys database 304. Then at step 612 the server re-encrypts the data using the server key 302. At step 614 the server stores the re-encrypted data in the secure data database 312 and at step 616 the process ends.

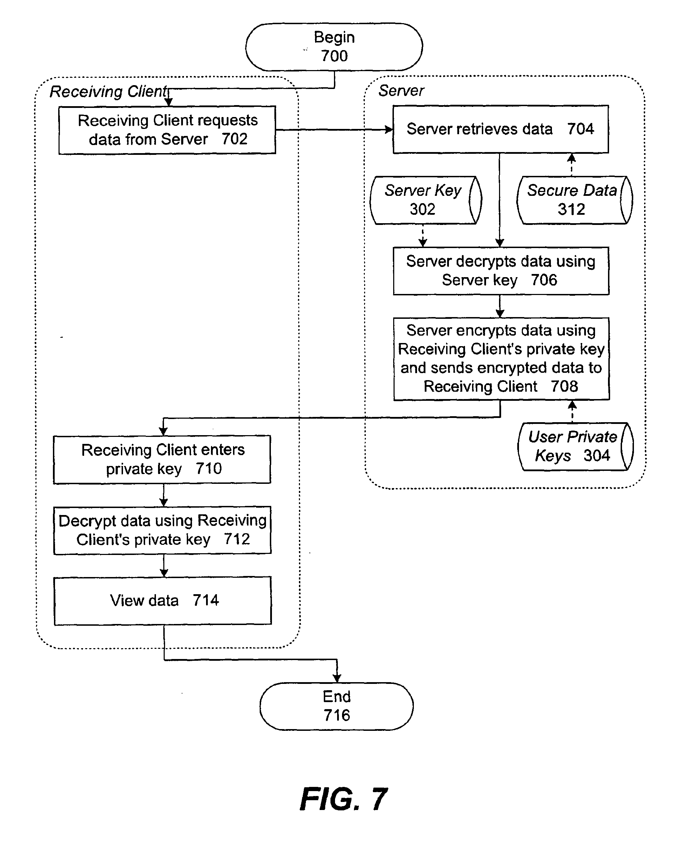

FIG. 7 is a flowchart of a method illustrating how a receiving client, having a shared private key, accesses encrypted data from the server computer through the Internet in accordance with the invention. The process begins at step 700. The receiving client establishes a session over the Internet with a suitable server by requesting the encrypted data from the server computer at step 702. At step 704 the server retrieves the encrypted data from the secure data database 312. At step 706 the server decrypts the data using the server key 302. Then at step 708 the server encrypts the data using the receiving client's private key that is stored in the user private keys database 304, and sends the encrypted data to the receiving client.

At step 710, the receiving client enters his private key, and at step 712 the encrypted data is decrypted with the receiving client's private key using the encrypt/decrypt engine 502. At step 714 the receiving client can access or view the data, and at step 716 the process ends.

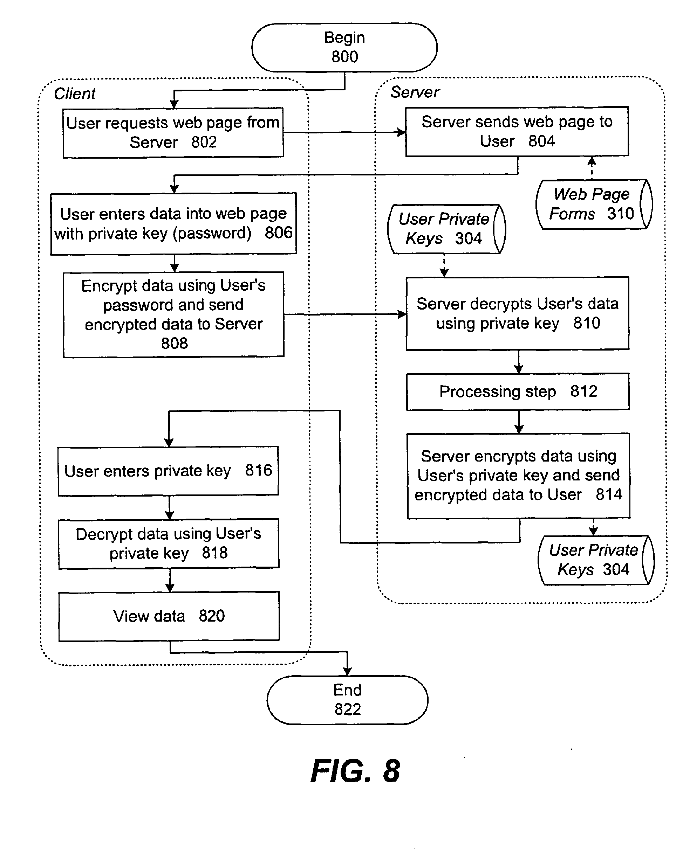

FIG. 8 is a flowchart of a method illustrating how a client, having a shared private key, passes secure data through a server computer over the Internet. This method is very similar to the process described in FIGS. 6 and 7. The process begins at step 800. A client having a private key shared with the server establishes a session over the Internet with the server by requesting a web page at step 802. At step 804 the server sends a web page form from the web page forms database 310 to the client. Next at step 806 the client enters data into the web page along with his private key shared with the server. At step 808 the data is encrypted with the encrypt/decrypt engine at the client's computer using the user's private key and then sent to the server.

At step 810 the server receives the sending client's data and decrypts the data with the user's private key that is stored in the user private keys database 304. Then at step 812 the server processes the data. This processing step can include many different types of applications including, but not limited to, storing data, calculating data, entering a stock transaction, verifying a credit card transaction, etc.

After the processing step is completed, at step 814 the server encrypts the processed data using the client's private key that is stored in the user private keys database 304 and sends the encrypted data to the client. It is not necessary for the client to be the same client that began the process at step 802. The server can be used as an intermediary for passing and processing secure data between clients.

At step 816, the client receives the secure data and enters his private key. At step 818 the encrypted processed data is decrypted with the client's private key using the encrypt/decrypt engine 502. At step 820 the client can access or view the data, and at step 822 the process ends.

Various modifications can be made to the above described methods in order to provide a secure system and method of sending and receiving secure data with a shared key. This can be done in low-level and high-level security methods. For example, if a first user wanted to send a highly secure memo to a second person over the Internet using a screen-level encryption, the first user could write the memo at his computer, encrypt the memo and send it as an email through a server to the second user. The second user could then decrypt the email with his password and view the memo on his computer screen. The application used to decrypt and display the memo on the computer screen can be programmed so that the memo cannot ever be in a decrypted state in any file on the computer, including temporary files, but only programmed to display the decrypted memo on a computer screen. The application could be resident on the user's computer, or it can be deployed as a Java™ applet.

## Claims

1. A method for securely transferring data via a server computer (100), comprising the steps of:
sending (602) from a client (102, 104) a request for a web page to the server computer (100);
sending (604) from the server computer (100) a web page to the client (102, 104), wherein an encrypt/decrypt engine (502) is served to the client (102, 104) and is stored in a non-volatile memory (406) or in a RAM (404) of the client (102, 104);
the client (102, 104) entering (606, 608) data into the web page along with a first user's key (304) and sending the encrypted data encrypted with the first user's key by the encrypt/decrypt engine (502) to the server computer (100), wherein the first user's key (304) is stored in a memory (206) of the server computer (100) and is shared only with a first user;
receiving (602, 604, 606, 608) the encrypted data on the server computer (100);
the server computer (100) decrypting the data with the first user's key (304) into decrypted data;
encrypting (612) the decrypted data with a server key (302);
storing (614) the re-encrypted data in a database (312) of the server computer;
a receiving client requesting (702) the encrypted data from the server computer (100);
the server computer (100) decrypting (706) the re-encrypted data with the server key (302);
encrypting the data with a second user's key (304) stored in the memory (206) of the server computer shared between a second user using the receiving client (102, 104) and the server computer (100); and
sending the encrypted data to the receiving client (102, 104) of the second user.

2. The method of claim 1, wherein the encrypted data sent to the receiving client of the second user can only be viewed on a computer screen by the second user.

3. A computer-readable medium comprising program instructions for performing the steps according to the method of claim 1 or 2.

## Patentansprüche

1. Ein Verfahren zum sicheren Übertragen von Daten mittels eines Servercomputers (100), welches die Schritte aufweist:
Senden (602) einer Anfrage nach einer Webseite von einem Client (102, 104) an den Servercomputer (100);
Senden (604) einer Webseite vom Servercomputer (100) an den Client (102, 104), wobei eine Verschlüsselungs-/Entschlüsselungs-Engine (502) dem Client (102, 104) geliefert und in einem nichtflüchtigen Speicher (406) oder in einem RAM (404) des Client (102, 104) gespeichert wird;
Eingabe (606, 608) von Daten in die Webpage zusammen mit einem ersten Nutzerschlüssel (304) durch den Client (102, 104) und Senden der verschlüsselten Daten, die von der Verschlüsselungs-/Entschlüsselungs-Engine (502) mit dem ersten Nutzerschlüssel (304) verschlüsselt sind, an den Servercomputer (100), wobei der erste Nutzerschlüssel (304) in einem Speicher (206) des Servercomputers (100) gespeichert ist und nur mit einem ersten Nutzer geteilt wird;
Empfangen (602, 604, 606, 608) der verschlüsselten Daten auf dem Servercomputer (100);
Entschlüsseln der Daten mit dem ersten Nutzerschlüssel (304) in entschlüsselte Daten durch den Servercomputer (100);
Verschlüsseln (612) der entschlüsselten Daten mit einem Serverschlüssel (302);
Speichern (614) der wiederverschlüsselten Daten in einer Datenbank (312) des Servercomputers (100);
Anfordern (702) der verschlüsselten Daten vom Servercomputer (100) durch einen Empfangs-Client;
Entschlüsseln (706) der wiederverschlüsselten Daten mit dem Serverschlüssel (302) durch den Servercomputer (100);
Verschlüsseln der Daten mit einem zweiten Nutzerschlüssel (304), der im Speicher (206) des Servercomputers (100) gespeichert ist und zwischen einem zweiten Nutzer, der den Empfangs-Client (102, 104) nutzt, und dem Servercomputer (100) geteilt wird; und
Senden der verschlüsselten Daten an den Empfangs-Client (102, 104) des zweiten Nutzers.

2. Verfahren nach Anspruch 1, wobei die zum Empfangs-Client des zweiten Nutzers gesendeten, verschlüsselten Daten nur an einem Computerbildschirm des zweiten Nutzers betrachtet werden können.

3. Ein Computer-lesbares Medium, das Programminstruktionen zum Ausführen der Schritte gemäß des Verfahrens nach Anspruch 1 oder 2 aufweist.

## Revendications

1. Procédé de transfert sécurisé de données par le biais d'un ordinateur serveur (100), comprenant les étapes consistant à :
envoyer (602) à partir d'un client (102, 104) une demande de page web à l'ordinateur serveur (100),
envoyer (604) à partir de l'ordinateur serveur (100) une page web au client (102, 104), où un moteur de cryptage/décryptage (502) est fourni au client (102, 104) et est mémorisé dans une mémoire rémanente (406) ou dans une mémoire vive (404) du client (102, 104),
le client (102, 104) entrant (606, 608) des données dans la page web en même temps qu'une première clé d'utilisateur (304) et envoyant les données cryptées, cryptées avec la première clé d'utilisateur par le biais du moteur de cryptage/décryptage (502) à l'ordinateur serveur (100), où la première clé d'utilisateur (304) est mémorisée dans une mémoire (206) de l'ordinateur serveur (100) et n'est partagée qu'avec un premier utilisateur,
recevoir (602, 604, 606, 608) les données cryptées sur l'ordinateur serveur (100),
l'ordinateur serveur (100) décryptant les données avec la première clé d'utilisateur (304) en données décryptées,
crypter (612) les données décryptées avec une clé de serveur (302),
mémoriser (614) les données de nouveau cryptées dans une base de données (312) de l'ordinateur serveur,
ce qu'un client de réception demande (702) les données cryptées auprès de l'ordinateur serveur (100),
ce que l'ordinateur serveur (100) décrypte (706) les données de nouveau cryptées avec la clé de serveur (302),
crypter les données avec une deuxième clé d'utilisateur (304) mémorisée dans la mémoire (206) de l'ordinateur serveur partagée entre un deuxième utilisateur utilisant le client de réception (102, 104) et l'ordinateur serveur (100), et
envoyer les données cryptées au client de réception (102, 104) du deuxième utilisateur.

2. Procédé selon la revendication 1, dans lequel les données cryptées envoyées au client de réception du deuxième utilisateur ne peuvent être visualisées sur un écran d'ordinateur que par le deuxième utilisateur.

3. Support lisible par un ordinateur comprenant des instructions de programme destinées à exécuter les étapes selon le procédé de la revendication 1 ou 2.
